# EUROPÄISCHE PATENTANMELDUNG

(11) **EP 2 756 773 A1**
(43) Veröffentlichungstag der Anmeldung: **23.07.2014**
(21) Anmeldenummer: 14000190.0
(22) Anmeldetag: 20.01.2014
(51) Int. Cl.: A45C 3/04, B62B 3/16, B65D 21/02, B62B 3/14, G09F 23/06

(54) **Einkaufskorb**

(30) Priorität: 21.01.2013 DE 102013000837; 02.03.2013 DE 102013003534
(71) Anmelder: Andres GmbH, 95100 Selb (DE)
(72) Erfinder: Grünling, Klaus André, DE - 95100 Selb (DE)
(74) Vertreter: FDST Patentanwälte

(57) **Zusammenfassung**

Die Erfindung betrifft einen Einkaufskorb (1, 1') mit einem Korbboden (2) sowie mit in Korbumfangsrichtung miteinander verbundenen Korblängs- und Korbstirnseiten (3, 4), wobei mindestens eine Korblängs- und/oder Korbstirnseite (3, 4) als Informations- oder Werbeträgerfläche (6) vorgesehen und eingerichtet ist.

## Beschreibung

Die Erfindung betrifft einen Einkaufs- oder Warenkorb mit einem Korbboden sowie mit in Korbumfangsrichtung miteinander verbundenen Korblängs- und Korbstirnseiten.

Ein derartiger Einkaufs- oder Warenkorb wird üblicherweise in Supermärkten oder ähnlichen Geschäften, insbesondere zusätzlich zu Einkaufswägen, bereitgestellt. Die Einkaufskörbe sind üblicherweise stapelbar und hierzu in Richtung der Korbhöhe konisch oder keilförmig ausgeführt, indem die Fläche des Korbbodens kleiner ist als die Fläche der Zugangsöffnung, die von den dem Korbboden abgewandten Seitenkanten der Korblängs- und Korbstirnseiten (Korbquerseiten) begrenzt ist. Die Korblängs- und Korbstirnseiten des aus Metallstäben aufgebauten oder aus Kunststoff bestehenden Einkaufskorbs sind in der Regel vollflächig gitterartig strukturiert.

Erfindungsgemäß weist der Einkaufskorb mindestens eine Informations- oder Werbetragfläche auf. Vorzugsweise sind an beiden Korblängsseiten und/oder an beiden Korbstirnseiten jeweils eine solche Informations- bzw. Werbeträgerfläche vorgesehen.

Um einen Werbe- oder Informationsträger in einfacher Weise am Einkaufskorb und vorzugsweise auswechselbar anzubringen, ist ein vorzugsweise einteiliger Rahmen vorgesehen, der die Informations- bzw. Werbefläche geeigneterweise randseitig begrenzt und an der entsprechenden Korbseite lösbar befestigt werden kann. Hierzu ist zweckmäßigerweise eine Rastverbindung zwischen dem Einkaufskorb und dem Rahmen realisiert. Dabei weist der Rahmen geeigneterweise Rasthaken auf, die mit im Randbereich der Werbe- bzw. Informationsfläche im gleichen Raster angeordneten Rastöffnungen korrespondieren.

Im Montagezustand, in dem der jeweilige Rahmen mit dem Einkaufskorb verrastet ist, begrenzt der Rahmen einerseits die entsprechende korbseitige Werbe- bzw. Informationsfläche. Andererseits bildet der Rahmen mit dessen beispielsweise profilierten Längs- und Rahmenquerseiten geeigneterweise einen randseitigen Überdeckungs- bzw. Überlappungsbereich mit der Werbe- bzw. Informationsfläche, so dass ein an diese angepasster Werbeträger vom Rahmen bzw. dessen Rahmenseiten überdeckt wird und diese vorzugsweise allseitig hintergreift. Dadurch ist die Werbefläche in einfacher Art und Weise zuverlässig gehalten und dessen Austauschbarkeit in einfacher Art und Weise gewährleistet.

Eine zusätzliche, transparente Abdeckplatte, deren Abmessungen ebenfalls an die Werbe- bzw. Informationsfläche einerseits sowie zur Ausbildung eines ausreichend sicheren Hintergriffs des Rahmens angepasst ist, ermöglicht einen Schutz der Werbefläche vor Beschädigungen bei dessen gleichzeitig guter Sichtbarkeit.

Der vorzugsweise einstückige oder einteilige Rahmen besteht geeigneterweise aus Kunststoff. Ebenso ist der Einkaufskorb vorzugsweise aus Kunststoff gefertigt. Zu dessen einfacher und geeigneter Handhabbarkeit bei gleichzeitig guter Stapelbarkeit sind vorzugsweise zwei schwenkbare Tragbügel vorgesehen, die zweckmäßigerweise zueinander beanstandet an den Korblängsseiten schwenkbar gehalten sind.

Im Zuge des Absetzens oder Stapelns des Einkaufskorbs können die Tragbügel nach außen verschwenkt werden, so dass diese die Korboberseite nicht oder nur geringfügig überragen. Hierzu kann im Bereich der Korboberseite an den Korblängs- und/oder Korbstirnseiten innenseitig ein vollständig oder teilweise umlaufender Absatz oder ein ähnliches Anlageelement gebildet sein, auf dem die Tragbügel im ausgeschwenkten Zustand, vorzugsweise zu den Korbflächen parallel und mit diesen bündig verlaufend, aufliegen. In diesem Zusammenhang des Absetzens und Stapelns des Einkaufs- oder Warenkorbes ist es zudem vorteilhaft, wenn dieser bodenseitige Füße, vorzugsweise in den vier Eckbereichen, aufweist. Insbesondere zur verbesserten Stapelbarkeit des Einkaufskorbs mit weiteren gleichartigen Einkaufskörben sind dessen Korblängs- oder Korbstirnseiten geeigneterweise trapezförmig, wobei deren vergleichsweise kurzen Grundseiten in den Korbboden übergehen, während die vergleichsweise langen Grundseiten die Korböffnung umranden.

In vorteilhafter Weiterbildung ist geeigneterweise eine Anzahl von Abstandselementen vorgesehen, um den Einkaufkorb zum Zwecke einer einfachen Stapelung in einen weiteren, gleichartigen Einkaufkorb einsetzten zu können. Das jeweilige Abstandelement weist hierzu eine dem Korbboden zugewandte und die jeweilige Korblängs- oder Korbstirnseite Querrichtung zur Rahmenebene überragende Anlagekontur auf. Mit dieser stütz sich der Einkaufkorb am diesen aufnehmenden weiteren Einkaufskorb, d. h. an dessen oberen, umlaufenden und die Korb- oder Korbeinfüllöffnung umgebenden Korbrand ab.

Das jeweilige Abstandselement ist zweckmäßigerweise am Rahmen und dort insbesondere an dessen dem Korbboden abgewandten und somit der Korböffnung zugewandten Rahmenoberseite angeordnet, zweckmäßigerweise an diesen angeformt. Insbesondere beim Stapeln des mit den Informations- bzw. Werbeträgerflächenrahmen versehenen Einkaufskorbs ist mittels der Abstandelemente ein verkanten und/oder verklemmen der Einkaufkörbe zuverlässig verhindert, indem sich der Einkaufskorb mit den Anlagekonturen der Abstandselemente am öffnungsseitigen Korbrand des diesen Einkaufskorb im Stapel aufnehmenden weiteren Einkaufskorb derart abstützt, dass sich die Korblängs- und Korbstirnseiten sowie die Rahmen nicht oder zumindest nicht reibschlüssig an der Innenwandung des im Stapel nachfolgenden Einkaufkorb anliegen. Hierdurch kann der Einkaufkorb dem Korbstapel stets klemmfrei und somit einfach entnommen werden.

In einer zweckmäßigen Weiterbildung ist der Einkaufskorb als Handwagen nach Art eines Trolleys ausgeführt. Hierzu kann ein separates Handwagengestell mit geeigneterweise zwei Rollen und einem vorzugsweise teleskopartig verstellbaren Griffteil oder Griffbügel vorgesehen sein. Dieses Handwagengestell kann mit Mitteln versehen sein, um den Einkaufskorb lösbar und sicher zu halten. Alternativ kann der Handwagen auch mit integriertem Einkaufskorb ausgeführt sein.

Nachfolgend werden Ausführungsbeispiele der Erfindung anhand einer Zeichnung näher erläutert. Darin zeigen:
- Fig. 1: in perspektivischer Darstellung einen Einkaufskorb mit an einer Korblängsseite und an einer Korbstirnseite vorgesehen Werbe-oder Informationsflächen,
- Fig. 2: den Einkaufskorb in einer Seitenansicht mit einem die Werbe-bzw. Informationsfläche umfangsseitig begrenzenden Rahmen,
- Fig. 3: in perspektivischer Darstellung den einteiligen Rahmen mit an dessen Längs- und Querseiten einer Anzahl von Rasthaken,
- Fig. 4: den Rahmen in einer Seitenansicht,
- Fig. 5: den Einkaufskorb in einer Seitenansicht mit umfangsseitig der Werbe- bzw. Informationsfläche vorgesehenen Rastöffnungen zur Aufnahme der Rasthaken des Rahmens,
- Fig. 6 und 7: in perspektivischer Darstellung bzw. in Seitenansicht einen Hand-wagen (Trolley) mit einem den Einkaufskorb aufnehmenden Trag-gestell mit einem Rollenpaar, und
- Fig. 8: in perspektivischer Darstellung den Einkaufskorb mit einer ande-ren Korbstruktur und mit rahmenseitigen Abstandselementen zur Verbesserung der Stapelbarkeit.

Einander entsprechende Teile sind in allen Figuren mit den gleichen Bezugszeichen versehen.

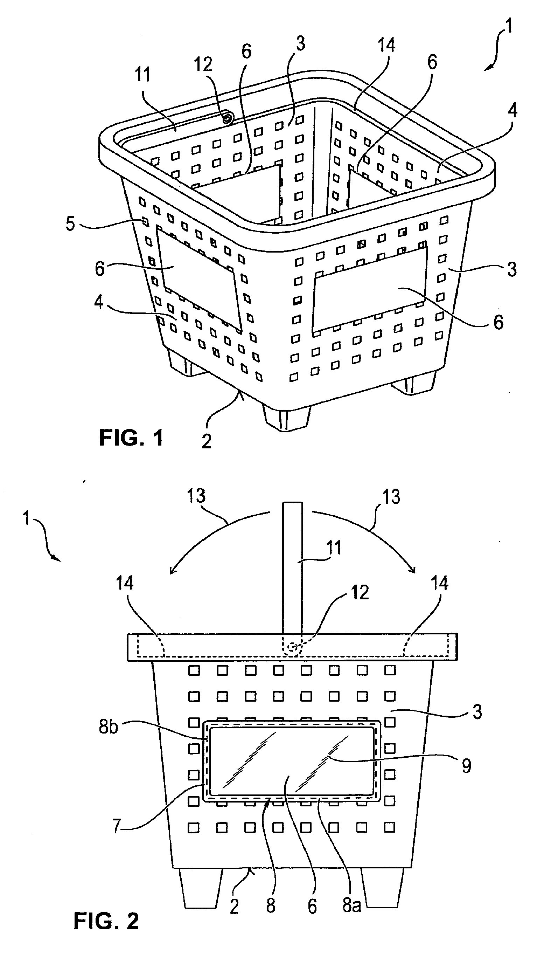

Fig. 1 zeigt in perspektivischer Darstellung einen Einkaufs- oder Warenkorb 1 mit einem Korbboden 2 sowie mit vier Korbseitenflächen 3, 4. Bei der gezeigten, im Querschnitt rechteckförmigen Gestaltung des Einkaufskorbs 1 sind mit dem Korbboden 2 sowie untereinander zwei gegenüber liegende Längsseiten 3 und zwei einander gegenüber liegende Stirnseiten (Querseiten) 4 gebildet. Der Einkaufskorb 1 besteht vorzugsweise aus Kunststoff, wobei die Korbseitenflächen 3, 4 mit einer Vielzahl von, beispielsweise regelmäßig oder unregelmäßig angeordneten Öffnungen oder Löchern 5 versehen sind. Deren Querschnitt kann beliebig, beispielsweise eckig oder rund sein. Bodenseitig, d. h. an der Unterseite des Korbbodens 2 sind nicht näher bezeichnete Füße oder Fußelemente angeformt, die einerseits eine verbesserte Stapelbarkeit mehrerer solcher Einkaufskörbe 1 ermöglichen, und die andererseits beim Absetzten des Einkaufskorbs 1 einen wünschenswerten Abstand des Korbbodens 2 zum Boden oder Untergrund herstellen.

Im Ausführungsbeispiel weisen alle Korbseiten, d.h. sowohl die beiden Korblängsseiten 3 als auch die beiden Korbstirnseiten 4 jeweils eine Werbefläche 6 auf. Auch kann an lediglich einer Korblängsseiten 3 und/oder einer Korbstirnseiten 4 eine solche Werbefläche 6 vorgesehen sein. Die Werbeflächen 6 befinden sich vorzugsweise zentral und erstrecken sich in Längs- und Querrichtung über einen Teil der jeweiligen Korbseite 3 bzw. 4.

Wie aus Fig. 2 ersichtlich ist, ist die jeweilige Werbefläche 6 mit einem Rahmen 7 versehen, der vorzugsweise mittels einer Rastverbindung mit dem Einkaufskorb 1 verrastet und somit an der jeweiligen Korbseite 3, 4 lösbar gehalten ist. Der Rahmen 7 überdeckt die Werbefläche 6 lediglich randseitig zumindest geringfügig, so dass ein Werbeträger 8, der auf die Werbe- bzw. Informationsfläche 6 des Einkaufskorbs 1 aufgelegt ist, den Rahmen 7 vorzugsweise allseitig zumindest teilweise hintergreift. Dies ist durch die strichlinierten Außenränder 8a, 8b des Werbeträgers 8 veranschaulicht.

Die Werbefläche 6 mit oder ohne aufgelegtem Werbeträger 8 ist geeigneterweise mittels einer transparenten Platte 9 abgedeckt, die sich ebenfalls randseitig unter den Rahmen 7 erstreckt und somit von diesem im verrastete oder verclipsten Befestigungszustand gehalten ist.

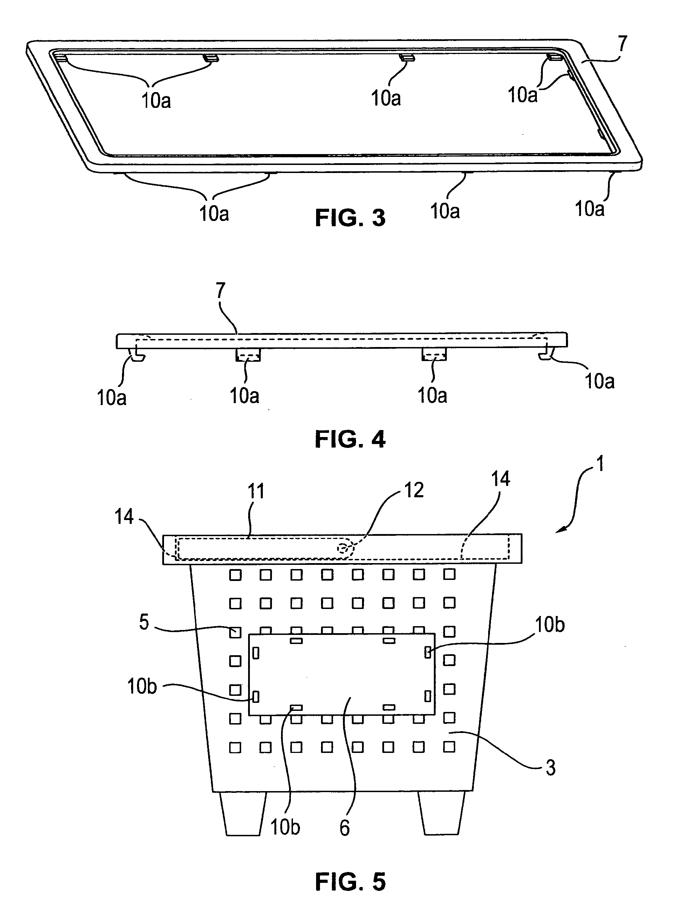

Gemäß den Figuren 3 und 4 weist der Rahmen 7 an dessen der Werbefläche 6 zugewandten Seite eine Anzahl von Rasthaken 10a auf, die mit korrespondierenden Rastöffnungen 10b, vorzugsweise im Randbereich, der jeweiligen Werbefläche 6 korrespondieren und im Zuge der Rastverbindung die Rasthaken 10a des jeweiligen Rahmens 7 aufnehmen. Im Ausführungsbeispiel sind an jeder Rahmenseite des Rahmens 7 jeweils zwei derartige Rasthaken 10a vorgesehen. Die Anzahl der Rasthaken 10a kann jedoch kleiner oder größer sein. Insbesondere kann der vergleichsweise kleine Rahmen 7 zur teilweisen Überdeckung der Werbefläche 6 einer Korbschmalseite 4 weniger Rasthaken 10a aufweisen, als derjenige Rahmen 7 für eine Korblängsseite 3.

Der Rahmen 7 mit dessen Rasthaken 10a sowie eine korrespondierende Werbefläche 6 an einer Korbseite 3, 4 des Einkaufskorbs 1 mit den korrespondierenden Rastöffnungen 10b sind aus den Fig. 3 bis 5 ersichtlich.

Gemäß den Fig. 2 und 3 ist der Einkaufskorb 1 mit zwei Tragbügeln 11 versehen, die über eine gelenkige Anbindung 12 mit den Korblängsseiten 3 schwenkbeweglich verbunden sind. Die Tragbügel 11 können entsprechend den in Fig. 2 eingezeichneten Bewegungspfeilen 13 nach außen verschwenkt werden. An den Korblängsseiten 3 und/oder Korbstirnseiten 4 können zur Begrenzung der Schwenkbewegung 13 der Tragbügel 14 korbinnenseitig Anlagekanten oder -konturen 14 vorgesehen sein.

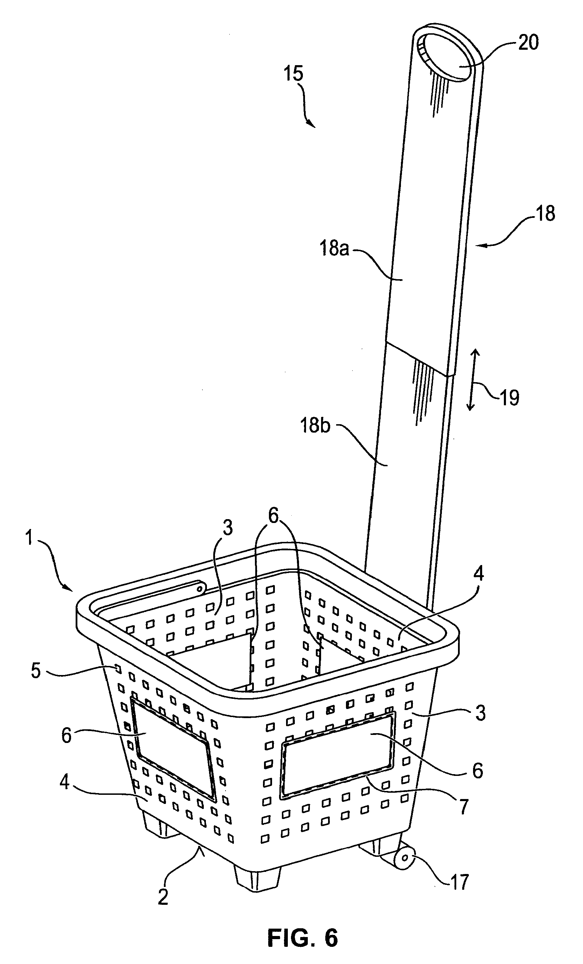

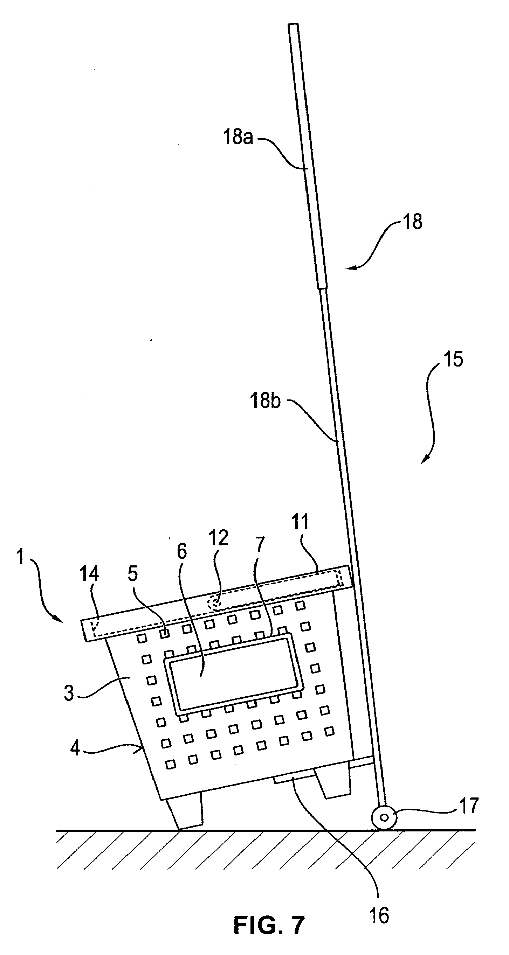

In den Fig. 6 und 7 ist ein Handwagen oder Trolley 15 mit einem derartigen Einkaufskorb 1 dargestellt. Der Einkaufskorb 1 kann mit einem Traggestell 16 mit beispielsweise einem Rollenpaar 17 einteilig ausgeführt oder mit diesem lösbar verbunden sein. Das Traggestell 16 des Handwagens 15 weist einen teleskopartigen Handhabungsgriff 18 mit in Pfeilrichtung 19 ineinander verschiebbaren Gestellteilen oder -holmen 18a, 18b auf. Auch kann ein einteiliger, d. h. steifer und nicht längenverstellbarer Handhabungsgriff vorgesehen sein. Zur Handhabung des Handwagens 15 weist dessen Wagengestell 16 eine freiendseitig des Handhabungsgriffs 18 vorgesehene horizontale Griffstange 20 auf.

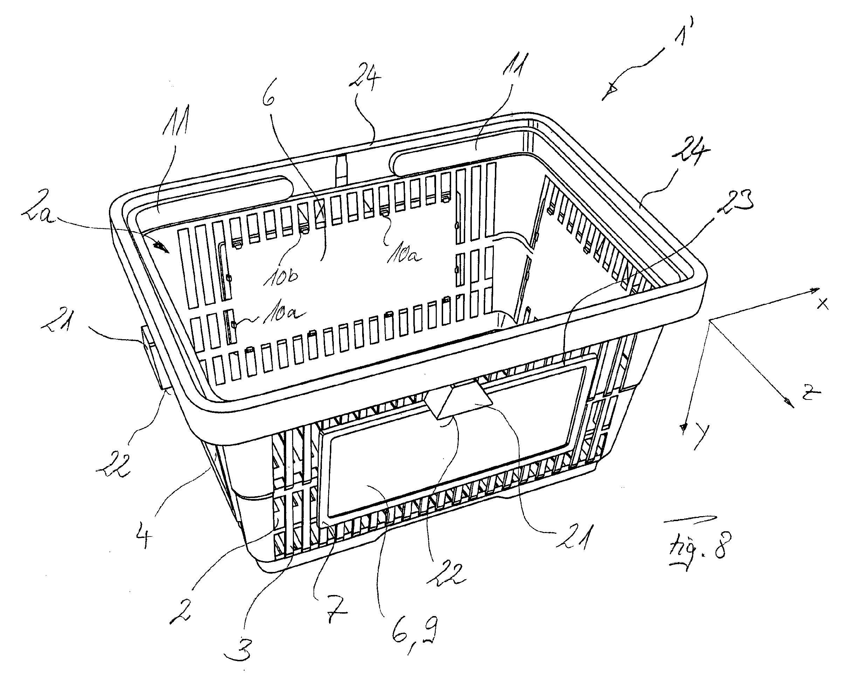

Fig. 8 zeigt einen Einkaufskorb 1' mit rechteckförmigem Querschnitt und gitterartiger Korbstruktur sowie wiederum trapezförmigen Korblängsseiten 3 und Korbstirnseiten 4, deren vergleichsweise kurzen Grundseiten in den Korbboden 2 übergehen, während die vergleichsweise langen Grundseiten der Korblängs- und Korbstirnseiten 3, 4 die Korböffnung 2a umfassen.

Der Einkaufskorb 1' weist wiederum geeigneterweise sowohl an den beiden Korblängsseiten 3 als auch an den beiden Korbstirn- oder Korbschmalseiten 4 jeweils eine Werbefläche 6 auf. Die Werbeflächen 6 sind wiederum mit einem Rahmen 7 versehen und mittels Rastverbindung am Einkaufskorb 1' lösbar gehalten. Das Abstandsraster der hierzu am jeweiligen Rahmen 7 vorgesehenen Rasthaken 10a ist an das Öffnungsraster der Korbstruktur angepasst, so dass entsprechende Korbschlitze die Rastöffnungen 10b für die Rahmen 7 bilden. Die Rahmen 7 können wiederum jeweils eine transparente Platte 9 als Abdeckung der jeweiligen Werbe- beziehungsweise Informationsfläche 6 fixieren.

Zumindest zwei Rahmen 7, die den einander gegenüberliegenden Korblängsseiten 3 oder Korbstirnseiten (Korbschmalseiten) 4 zugeordnet sind, weisen jeweils ein Abstandselement 21 mit einer dem Korbboden 2 zugewandten Anlagekontur 22 auf, die als Anlagefläche oder Anlagekante ausgebildet sein kann. Das Abstandselement 21 und insbesondere dessen jeweilige Anlagekontur 22 ragen aus der eingezeichneten xy-Ebene der im Ausführungsbeispiel vorderen Korblängsseite 3 in der dargestellten z-Richtung heraus.

Dieser Überstand der Anlagekontur 22 in z-Richtung ist derart bemessen, dass der Einkaufskorb 1' bei dessen Einsetzen in einen (nicht dargestellten) weiteren, gleichartigen Einkaufskorb am umlaufenden Korböffnungsrand 24 aufliegt, der die Korböffnung 2a umschließt. Mittels der Bestandselemente 21 ist daher die in Fig. 8 in y-Richtung weisende Eintauchtiefe des Einkaufskorbs 1' in den weiteren Einkaufskorb begrenzt. Dadurch wird verhindert, dass der Einkaufskorb 1' mit dessen Rahmen 7 an der Innenwandung des weiteren Einkaufskorbs unter Klemmwirkung anliegt, was ein Entnehmen des Einkaufskorbs 1' aus einem Korbstapel beziehungsweise dem den Einkaufskorb 1' aufnehmenden weiteren Einkaufskorb wesentlich erleichtert.

Derart ausgestaltete Rahmen 7 mit an deren Rahmenoberseite 23 angeformten Abstandselementen 21 können auch bei den in den Figuren 2 und 6 gezeigten Einkaufskörben 1 zur Verbesserung der Stapelbarkeit vorgesehen sein.

Die Abstandselemente 21 können eine von der in Fig. 8 gezeigten Pyramidenstumpfform abweichende Form aufweisen, beispielsweise kubisch oder zylindrisch oder nach Art eines Tetraeders ausgeführt sein. Auch können jedem Rahmen beispielsweise zwei zueinander beabstandete Abstandselemente 21 zugeordnet sein.

### Bezugszeichenliste

- 1,1': Einkaufs-/Warenkorb
- 1: Korbboden
- 2a: Korböffnung
- 2: Korblängsseite
- 3: Korbstirnseite
- 4: Loch
- 5: Werbe-/Informationsfläche
- 6: Rahmen
- 7: Werbeträger
- 8a, b: Außenrand
- 8: transparente Platte
- 10a: Rasthaken
- 10b: Rastöffnung
- 11: Tragbügel
- 12: gelenkige Anbindung
- 13: Bewegungspfeil
- 14: Anlagekante /-kontur
- 15: Handwagen / Trolley
- 16: Traggestell
- 17: Rollenpaar
- 18: Handhabungsgriff
- 18a, b: Gestellteil/-holm
- 19: Pfeilrichtung
- 20: Griffstange
- 21: Abstandselement
- 22: Anlagekontur
- 23: Rahmenoberseite
- 24: Korböffnungsrand

## Patentansprüche

1. Einkaufskorb (1, 1') mit einem Korbboden (2) sowie mit in Korbumfangsrichtung miteinander verbundenen Korblängs- und Korbstirnseiten (3, 4),
**dadurch gekennzeichnet,**
**dass** mindestens eine Korblängs- und/oder Korbstirnseite (3, 4) als Informations- oder Werbeträgerfläche (6) vorgesehen und eingerichtet ist.

2. Einkaufskorb (1,1') nach Anspruch 1,
**gekennzeichnet durch**
trapezförmige Korblängs- und Korbstirnseiten (3, 4), wobei deren vergleichsweise kurzen Grundseiten in den Korbboden (2) übergehen, während die vergleichsweise langen Grundseiten die Korböffnung (2a) umranden.

3. Einkaufskorb (1, 1') nach Anspruch 1 oder 2,
**dadurch gekennzeichnet,**
**dass** die oder jede Korblängs- und/oder Korbstirnseite (3, 4) im Bereich der Informations- bzw. Werbeträgerfläche (6) einen mit der jeweiligen Korblängs- oder Korbstirnseite (3, 4), vorzugsweise lösbar, verbundenen, insbesondere verrasteten, Rahmen (7) trägt.

4. Einkaufskorb (1, 1') nach Anspruch 3,
**dadurch gekennzeichnet,**
- **dass** der Rahmen (7) eine Anzahl von, insbesondere nach innen gerichteten, Rasthaken (10a) aufweist, und
- **dass** die Informations- bzw. Werbeträgerfläche (6), insbesondere in deren Randbereich, eine Anzahl von Rastöffnungen (10b) zur Aufnahme der Rasthaken (10a) des Rahmens (7) aufweist.

5. Einkaufskorb (1, 1') nach einem der Ansprüche 1 bis 4,
**gekennzeichnet durch**
mindestens ein Abstandselement (21) mit einer dem Korbboden (2) zugewandten und die jeweilige Korblängs- oder Korbstirnseite (3, 4) in Querrichtung (z) zur Rahmenebene (x, y) überragenden Anlagekontur (22).

6. Einkaufskorb (1, 1') nach Anspruch 5,
**dadurch gekennzeichnet,**
**dass** das Abstandselement (21) am Rahmen (7), insbesondere an dessen dem Korbboden (2) abgewandten Rahmenoberseite (23), angeordnet, insbesondere angeformt, ist.

7. Einkaufskorb (1, 1') nach einem der Ansprüche 3 bis 6,
**dadurch gekennzeichnet,**
**dass** der, vorzugsweise einstückige, Rahmen (7) aus Kunststoff besteht.

8. Einkaufskorb (1, 1') nach einem der Ansprüche 1 bis 7,
**gekennzeichnet durch**
eine transparente Platte (9) zur Abdeckung der Informations- bzw. Werbeträgerfläche (6).

9. Einkaufskorb (1, 1') nach einem der Ansprüche 1 bis 8,
**gekennzeichnet durch**
mindestens einen, vorzugsweise an den Korblängsseiten (3), schwenkbeweglich gehaltenen Tragbügel (11).

10. Einkaufskorb (1, 1') nach Anspruch 9,
**dadurch gekennzeichnet,**
**dass** im Bereich der Korboberseite an den Korblängs- und/oder Korbstirnseiten (3, 4) innenseitig ein vollständig oder teilweise umlaufende Anlagekontur (14) vorgesehen, auf dem der/die Tragbügel im ausgeschwenkten Zustand, vorzugsweise zu den Korbflächen parallel und mit diesen bündig verlaufend, aufliegen.

11. Einkaufskorb (1, 1') nach einem der Ansprüche 1 bis 10, mit korbbodenseitigen, vorzugsweise angeformten, Fußelementen.

12. Einkaufskorb (1, 1') nach einem der Ansprüche 1 bis 11,
**gekennzeichnet durch**
ein mit Rollen (17) versehenes Handwagengestell (18) nach Art eines Trolleys (15).

13. Handwagengestell (18) nach Art eines Trolleys (15), das bzw. der dazu vorgesehen und eingerichtet ist, einen Einkaufskorb (1, 1') nach einem der Ansprüche 1 bis 12 aufzunehmen.
